Europäisches Patentamt

European Patent Office

Office européen des brevets

(19)

(11) **EP 0 911 670 B1**

(12) **FASCICULE DE BREVET EUROPEEN**

(45) Date de publication et mention
de la délivrance du brevet:
**12.09.2001 Bulletin 2001/37**

(51) Int Cl.⁷: **G02C 7/02**

(21) Numéro de dépôt: **98402531.2**

(22) Date de dépôt: **13.10.1998**

(54) **Lentille ophtalmique multifocale**

Multifokale ophthalmische Linse

Multifocal ophthalmic lens

(84) Etats contractants désignés:
**BE CH DE ES GB IE IT LI NL PT**

(30) Priorité: **16.10.1997 FR 9712990**

(43) Date de publication de la demande:
**28.04.1999 Bulletin 1999/17**

(73) Titulaire: **ESSILOR INTERNATIONAL
COMPAGNIE GENERALE D'OPTIQUE
94227 Charenton cédex (FR)**

(72) Inventeurs:
• **Baudard, Thierry
94340 Joinville-Le-Pont (FR)**
• **Ahsbahs, Françoise
94100 Saint Maur (FR)**

• **Miege, Christian
75013 Paris (FR)**

(74) Mandataire: **Desrousseaux, Grégoire Marie et al
Cabinet HIRSCH-DESROUSSEAUX-POCHART,
34 rue de Bassano
75008 Paris (FR)**

(56) Documents cités:
**EP-A- 0 738 911        GB-A- 2 261 527
GB-A- 2 273 369**

• **GUILINO G H: "DESIGN PHILOSOPHY FOR
PROGRESSIVE ADDITION LENSES" APPLIED
OPTICS, vol. 32, no. 1, 1 janvier 1993, pages
111-117, XP000331309**

**Description**

La présente invention a pour objet une lentille ophtalmique multifocale, comportant une surface asphérique présentant en tout point une sphère moyenne et un cylindre, une zone de vision de loin, une zone de vision de près, une zone de vision intermédiaire, une méridienne principale de progression traversant ces trois zones.

De telles lentilles sont bien connues; on peut parmi ces lentilles multifocales distinguer des lentilles appelées lentilles progressives adaptées à la vision à toutes les distances, et des lentilles plus spécifiquement dédiées à la vision de près et à la vision intermédiaire.

Les lentilles ophtalmiques multifocales progressives comprennent une zone de vision de loin, une zone de vision de près, une zone de vision intermédiaire, une méridienne principale de progression traversant ces trois zones. Le document FR-A-2 699 294, décrit dans son préambule les différents éléments d'une lentille ophtalmique multifocale progressive (méridienne principale de progression, zone de vision de loin, zone de vision de près, etc.), ainsi que les travaux menés par la demanderesse pour améliorer le confort des porteurs de telles lentilles.

La demanderesse a aussi proposé, pour mieux satisfaire les besoins visuels des presbytes et améliorer le confort des lentilles multifocales progressives, d'adapter la forme de la méridienne principale de progression, en fonction de l'addition de puissance A (demande de brevet FR-A-2 683 642)

Pour de telles lentilles, on appelle addition de puissance A la variation de sphère moyenne entre un point de référence de la zone de vision de loin et un point de référence de la zone de vision de près.

Ces lentilles progressives sont généralement prescrites en fonction de l'amétropie du porteur et de la puissance nécessaire en vision de près.

Il existe aussi des lentilles dédiées plus spécifiquement à la vision de près; ces lentilles ne présentent pas une zone de vision de loin avec un point de référence défini comme dans les lentilles progressives classiques. Ces lentilles sont prescrites en fonction de la puissance nécessaire au porteur en vision de près, indépendamment de la puissance en vision de loin. Une telle lentille est décrite dans une article de l'Opticien Lunetier d'avril 1988, et est commercialisée par la demanderesse sous la marque Essilor Delta; cette lentille est simple à utiliser et aussi facile à supporter qu'une lentille progressive, et est attirante pour la population des presbytes non équipée de lentilles progressives. Cette lentille est aussi décrite dans la demande de brevet FR-A-2 588 973. Elle présente une partie centrale qui équivaut au verre unifocal que l'on utiliserait normalement pour corriger la presbytie, de sorte à assurer une vision de près satisfaisante. Elle présente en outre une légère décroissance de puissance dans la partie supérieure, qui assure au porteur une vision nette aussi au delà du champ habituel de vision de près. Enfin, la lentille présente un point à une valeur de puissance égale à la puissance nominale de vision de près, une zone de puissance plus élevée dans la partie inférieure du verre, et une zone de puissance plus faible dans la partie supérieure du verre.

Les lentilles multifocales existantes, qu'elles soient progressives ou dédiées à la vision de près, peuvent encore être améliorées en ce qui concerne la douceur, pour augmenter ainsi le confort des porteurs et pour faciliter l'adaptation des porteurs à leurs lentilles. En effet, les porteurs de lentilles multifocales ressentent parfois une gêne en vision dynamique, qui peut être à l'origine de troubles comme des maux de têtes ou des nausées. Elles peuvent aussi être améliorées en maintenant une zone de vision de près haute sur le verre et en assurant des champs de vision larges, tant en vision de près qu'en vision intermédiaire.

La présente invention propose une lentille multifocale qui pallie les inconvénients des lentilles de l'art antérieur et qui assure au porteur une vision périphérique améliorée, tout en maintenant de bonnes performances en vision fovéale, facilitant ainsi l'adaptation des porteurs à leurs lentilles. L'invention assure néanmoins une progression rapide de la sphère moyenne, et ménage ainsi une zone de vision de près importante. Elle assure en outre une répartition équilibrée des lignes d'isosphère et d'isocylindre.

L'invention a pour objet une lentille ophtalmique multifocale, comportant une surface asphérique présentant en tout point une sphère moyenne et un cylindre, et comprenant une zone de vision de loin, une zone de vision de près, une zone de vision intermédiaire, une méridienne principale de progression traversant ces trois zones, et une addition, caractérisée en ce que la longueur principale de progression est inférieure à 16 mm, en ce que la valeur maximale $|dS/d\theta|_{max}$ du module de la dérivée tangentielle de la sphère moyenne sur un cercle d'un diamètre de 40 mm, centré sur le centre géométrique de la lentille est inférieure au quart de la valeur maximale $P_{mer}$ de la pente de sphère moyenne le long de la méridienne:

$$|dS/d\theta|_{max}/P_{mer} < 0{,}25$$

et en ce que la valeur maximale $C_{max}$ du cylindre à l'intérieur dudit cercle est inférieure à l'addition nominale de la lentille:

$$C_{max} < A_{nom}.$$

Avantageusement, la méridienne principale de progression est constituée des milieux des segments horizontaux reliant les lignes respectives formées des points de cylindre 0,50 dioptrie.

La zone de vision de près, délimitée dans la partie inférieure de la lentille par des lignes formées des points dont le cylindre est égal à la moitié de l'addition peut présenter une largeur supérieure à 14,5 mm à la hauteur d'un point de référence pour la vision de près.

La zone de vision de loin, délimitée dans la partie supérieure de la lentille par des lignes formées des points dont le cylindre est égal à la moitié de l'addition comprend de préférence au moins un secteur formé par deux demi-droites ayant pour origine le centré géométrique de la lentille, l'angle entre ces deux demi-droites vers la partie supérieure de la lentille étant d'au moins 150°.

De préférence, le cylindre sur la surface de la lentille est inférieur à l'addition, de préférence inférieur à 90% de l'addition.

Avantageusement, la différence des valeurs maximales du cylindre sur les deux parties de la lentille délimitées par la méridienne principale de progression est inférieure à 0,1 dioptrie, de préférence inférieure à 0,05 dioptrie.

Dans un mode de réalisation, la lentille est une lentille multifocale dédiée à la vision de près et à la vision intermédiaire, et elle présente une addition définie comme la différence entre les valeurs maximale et minimale de la sphère moyenne sur la méridienne principale de progression, dans ledit cercle.

Dans ce cas, la longueur principale de progression est avantageusement définie comme le rapport entre l'addition et la valeur maximale de la pente de sphère moyenne $P_{mer}$ le long de la méridienne,

Dans un autre mode de réalisation, la lentille est une lentille multifocale progressive, et elle présente un point de référence pour la zone de vision de près, un point de référence pour la zone de vision de loin, et une addition définie comme la différence entre les valeurs de sphère moyenne en ces deux points.

Dans ce cas, la longueur principale de progression est avantageusement définie comme la différence de hauteur entre une croix de montage et un point de la méridienne dont la sphère moyenne est égale à la somme de la sphère moyenne au point de référence pour la zone de vision de loin et de 85% de l'addition.

D'autres caractéristiques et avantages de la présente invention apparaîtront à la lecture de la description qui suit d'un mode de réalisation de l'invention, donnée à titre d'exemple et en référence aux dessins annexés qui montrent:

- figure 1 une vue schématique de face d'une lentille multifocale progressive;
- figure 2 une représentation graphique de la puissance le long de la méridienne d'une lentille selon l'invention;
- figure 3 une vue de face de la lentille de la figure 2, montrant la méridienne principale de progression et des lignes de niveau de la sphère moyenne;
- figure 4 une vue de face de la lentille de la figure 2, montrant la méridienne principale de progression et des lignes de niveau du cylindre;

- figure 5 une représentation de la dérivée de la sphère en fonction de l'angle, sur un cercle de rayon 20 mm centré sur le centre géométrique de la lentille;
- figures 6 à 8 des vues analogues à celles des figures 2 à 4 pour une addition de 2 dioptries;
- figures 9 à 11 des vues analogues à celles des figures 2 à 4 pour une addition de 3 dioptries.

Dans la suite de la présente description, on utilise un système de coordonnées orthonormé où l'axe des abscisses correspond à l'axe horizontal de la lentille et l'axe des ordonnées à l'axe vertical; le centre O du repère est le centre géométrique de la lentille.

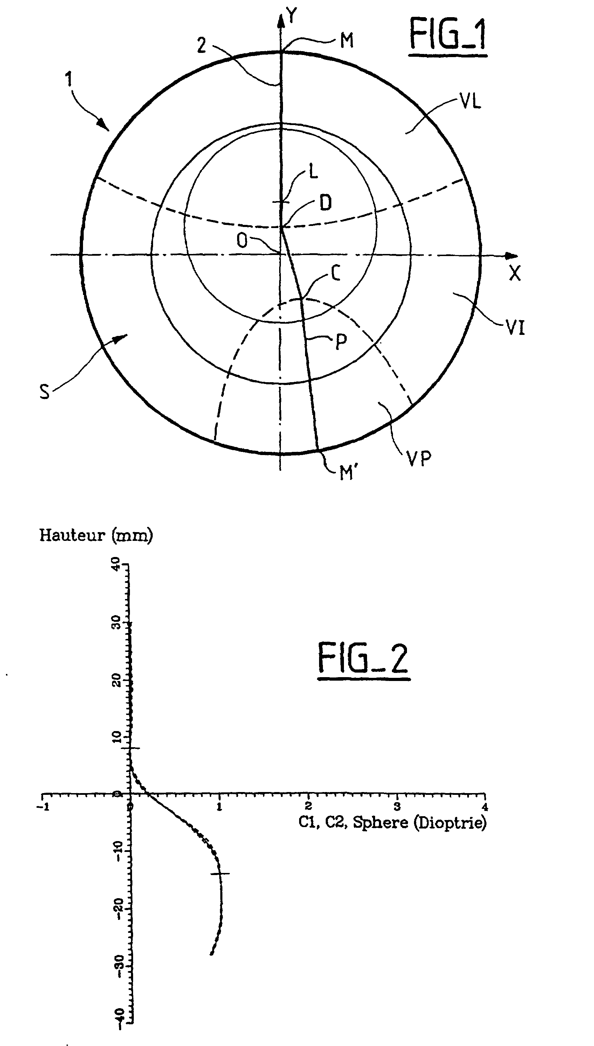

La figure 1 montre une vue schématique de face d'une lentille ophtalmique progressive connue, avec les divers éléments de cette lentille.

Les figures 2 à 5 représentent les caractéristiques optiques d'une lentille selon l'invention, qui présente un diamètre de l'ordre de 60 mm. On a décrit en référence à ces figures une lentille présentant une addition d'une dioptrie.

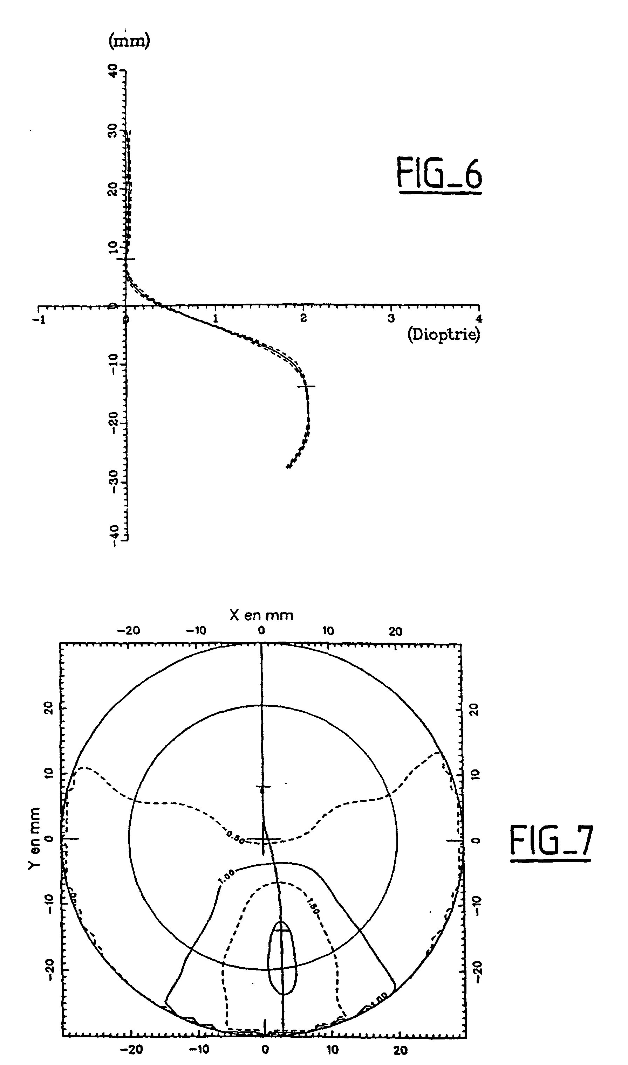

Les figures 6 à 11 représentent des vues analogues, pour des lentilles d'addition 2 ou 3.

On décrit maintenant en référence à la figure 1 les différents éléments d'une lentille ophtalmique multifocale. Une telle lentille présente généralement une face asphérique représentée sur la figure 1 et une autre face qui peut être sphérique ou torique.

En tout point de la surface asphérique, on définit une sphère moyenne D donnée par la formule:

$$D = \frac{n-1}{2} \left( \frac{1}{R_1} + \frac{1}{R_2} \right)$$

où:

$R_1$ et $R_2$ sont les rayons de courbure maximal et minimal exprimés en mètres, et
n l'indice du matériau constituant la lentille.

On définit aussi un cylindre C, donné par la formule:

$$C = (n-1) \left| \frac{1}{R_1} - \frac{1}{R_2} \right|$$

On appelle lignes d'isosphère les lignes constituées par les projections dans le plan tangent à la surface progressive en O des points de la surface présentant une sphère moyenne de même valeur. De la même façon, on appelle ligne d'isocylindre les lignes constituées par la projection dans le plan précité des points de la surface présentant un cylindre de même valeur..

Classiquement, la lentille 1 comprend dans sa partie supérieure une zone de vision de loin VL, dans sa partie inférieure une zone de vision de près VP, et entre ces deux zones une zone intermédiaire VI. Pour une lentille progressive, on définit dans la zone de vision de près et dans la zone de vision de loin un point P de référence ou de mesure pour la vision de près et un point L de référence ou de mesure pour la vision de loin. Pour une lentille dédiée à la vision de près, on définit dans la zone de vision de près un point P de référence ou de mesure pour la vision de près; toutefois, on ne définit pas de point de référence correspondant pour la zone de vision de loin.

On a représenté sur la figure 1 en gras la méridienne principale de progression 2 de la lentille, qui traverse les zones de vision de loin, de vision intermédiaire et de vision de près. Cette méridienne est définie comme le lieu des points milieux des segments horizontaux délimités par les courbes d'isocylindre 0,50 dioptrie. Dans l'exemple de la figure 1, elle est essentiellement constituée de trois segments, le premier s'étendant sensiblement verticalement depuis le haut de la lentille, en passant par le point L, jusqu'à un point D appelé centre de montage ou croix de montage et situé entre ce point L et le centre géométrique O. Le deuxième segment s'étend à partir du point D obliquement en direction du côté nasal de la lentille, et le troisième segment part de l'extrémité C du deuxième segment et passe par le point P de mesure de la vision de près. D'autres formes de méridiennes sont possibles.

Dans le cas des lentilles ophtalmiques multifocales progressives, on définit de manière connue en soi une addition de puissance A, qui est la différence de sphère moyenne entre le point P de référence de la zone de vision de près et le point L de référence de la zone de vision de loin.

Pour les lentilles multifocales dédiées à la vision de près et à la vision intermédiaire, on mesure sur la méridienne ainsi définie les valeurs minimales et maximales de la sphère, dans la limite d'un cercle de rayon 20 mm, centré sur le centre géométrique de la lentille. On appelle alors addition la différence entre ces valeurs minimales et maximales de la sphère; cette définition est sensiblement équivalente, pour les lentilles progressives, à la définition classique de l'addition comme la différence de sphère entre les points de référence pour la vision de près et la vision de loin.

Avec ces définitions, on considère généralement que la zone de vision de loin est délimitée, dans la partie supérieure de la lentille par les isocylindres de valeur égale à la moitié de l'addition. De la même façon, la zone de vision de près est délimitée, dans la partie inférieure de la lentille, par les isocylindres de valeur égale à la moitié de l'addition.

On a aussi représenté sur la figure 1 la zone balayée par le regard pour les tâches courantes. La taille et la position de cette zone sur la lentille ont été déterminées par de nombreuses campagnes de mesures effectuées dans les laboratoires de la demanderesse; on pourra se référer par exemple à IEEE 1992, Portable eye movement recorder, T. Bonnin et N. Bar, Proceedings of the 14th Annual International conference on the IEEE Engineering in Medecine and Biology Society 1992, Part 4, pages 1668-1669, à AAO 1993, Optimization of ophthalmic aspheric lenses: recording of eye movement for everyday tasks, N. Bar, T. Bonnin, C. Pedrono, Optometry and Vision Science 1993, no 12s, vol. 70 page 154, ou encore à ECEM 93, The use of visual space, poster de N. Bar. Cette zone recouvre un disque de 30 mm de diamètre centré sur le centre de montage.

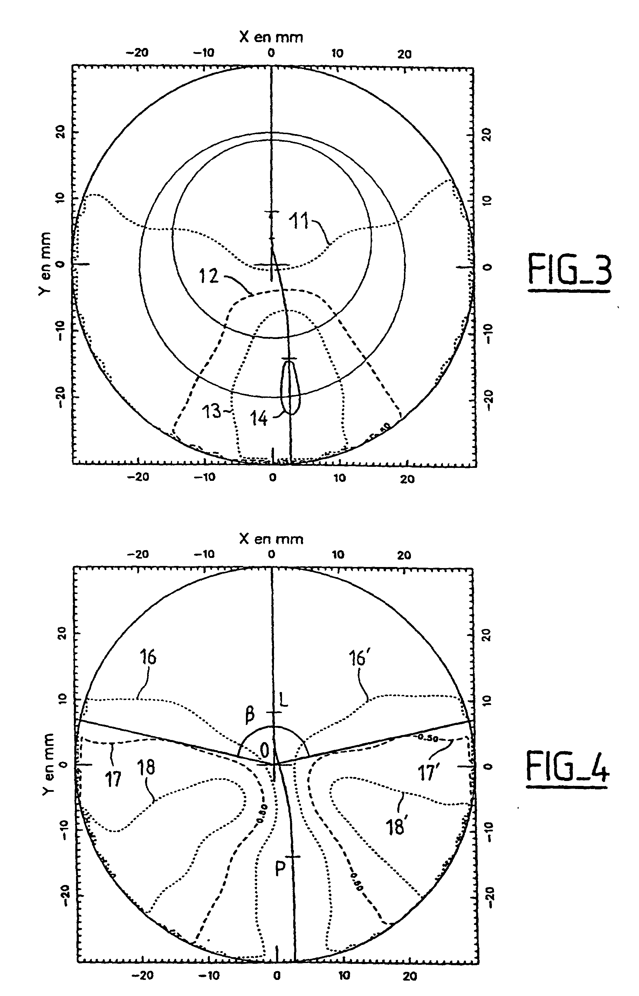

Pour assurer au porteur un confort de vision maximal, on considère le cercle de diamètre 40 mm centré au centre géométrique de la lentille qui englobe la zone de vision fovéale, et on cherche à maîtriser les variations tangentielles de la sphère le long de ce cercle. En contrôlant la variation de la sphère sur ce cercle, on maîtrise les déformations et les vitesses de variation des caractéristiques optiques de la surface multifocale; la vision périphérique du porteur est ainsi améliorée. On cherche en outre à maîtriser des défauts tels que le cylindre, à l'intérieur du cercle de diamètre 40 mm, pour garantir le mieux possible une vision nette dans la zone de vision fovéale. Ce cercle est représenté sur la figure 2 et sur les figures 3, 7 et 10.

Pour améliorer la douceur des lentilles, et faciliter l'adaptation des porteurs, la présente invention propose de considérer une nouvelle définition des caractéristiques de la surface de la lentille, expliquée en référence aux figures suivantes. Ces figures correspondent au cas de lentilles multifocales progressives; l'invention s'applique mutatis mutandis aux lentilles multifocales dédiées à la vision de près.

La figure 2 est une représentation graphique de la puissance le long de la méridienne d'une lentille selon l'invention, d'addition une dioptrie. Les ordonnées sur le graphique de la figure 1 sont les ordonnées sur la lentille; les abscisses donnent en dioptries la différence de puissance avec le point de référence dans la zone de vision de loin.

Le point d'ordonnée y=8 mm sur la méridienne est le point pour lequel la sphère est minimale, qui correspond aussi, dans le cas de la lentille progressive de la figure 2, au point L de référence pour la vision de loin; en ce point, la sphère moyenne vaut 5,20 dioptries et le cylindre 0,01 dioptrie; le point d'ordonnée y=-14 mm sur la méridienne est le point P de référence pour la vision de près; en ce point, la sphère moyenne vaut 6,20 dioptries et le cylindre vaut 0,01 dioptrie.

Dans le cas d'une lentille multifocale progressive, on appelle longueur principale de progression $L_{pp}$ la différence entre l'ordonnée de la croix de montage et l'ordonnée du point de la méridienne dont la sphère moyenne est égale à la somme de la sphère moyenne au point de référence pour la zone de vision de loin et de 85% de l'addition. Dans l'exemple de la figure 2, la sphère moyenne est supérieure de 85% de l'addition à la sphère moyenne au point de référence pour la zone de vision de loin en un point d'ordonnée y = - 8, 4 mm; pour une croix de montage d'ordonnée y = = 4 mm, la longueur principale de progression est de 12,4 mm.

Dans le cas des lentilles multifocales dédiées à la vision de près et à la vision intermédiaire, on appelle longueur principale de progression le rapport entre l'addition telle que définie plus haut et la pente de sphère moyenne le long de la méridienne; ce rapport s'écrit

$$L_{pp} = (S_{max} - S_{min})/P_{mer}$$

où $S_{max}$ et $S_{min}$ sont respectivement les valeurs maximale et minimale de la sphère sur la méridienne, et $P_{mer}$ représente la valeur maximale de la pente de sphère le long de la méridienne; cette pente de sphère correspond au module maximal du gradient de la sphère par rapport à x et ou y. Ce rapport $L_{pp}$ est homogène à une longueur, et est représentatif de la longueur sur laquelle la sphère moyenne augmente d'une valeur correspondant à l'addition.

Dans les deux cas, la longueur principale de progression rend compte de la hauteur sur la méridienne correspondant à une variation de la sphère moyenne sensiblement égale à l'addition.

La figure 2 montre d'abord que la sphère reste sensiblement constante dans la zone de vision de loin, au dessus du point L. Elle montre aussi que la sphère reste sensiblement constante dans la zone de vision de près, au voisinage du point P. Enfin, elle montre que la longueur principale de progression est faible, et notamment inférieure à 16 mm. Ceci assure une vision de près satisfaisante dans une zone allant au-dessus du point de contrôle de la vision de près, et évite les mouvements de tête du porteur. On assure ainsi une vision prolongée confortable en vision de près. La pente maximale de la sphère sur la méridienne est de 0,085 dioptrie par mm.

La figure 3 montre une vue de face de la lentille de la figure 2, montrant la méridienne principale de progression et des lignes de niveau de la sphère moyenne. On retrouve sur la figure 3 les éléments représentés sur la figure 2. On a en outre porté à la figure 3 les lignes d'isosphère. Les lignes d'isosphère de la figure 3 sont des lignes 11, 12, 13 et 14, qui présentent respectivement une sphère moyenne supérieure de 0,25, 0,50, 0,75 ou 1,00 dioptrie supérieure à celle du point L de vision de loin. Enfin, on a représenté sur la figure 3 le cercle de diamètre 40 mm, centré sur le centre géométrique de la lentille.

La figure 4 montre une vue de face de la lentille de la figure 2, montrant la méridienne principale de progression et des lignes de niveau du cylindre. On retrouve encore sur la figure 4 les éléments représentés sur la figure 2. Comme le cylindre est faible le long de la méridienne principale de progression, les lignes d'isocylindre sont au nombre de deux pour chaque valeur du cylindre. Les lignes d'isocylindre de la figure 4 sont des lignes 16 et 16', 17 et 17', 18 et 18' qui présentent respectivement un cylindre de 0,25, 0,50, et 0,75 dioptries.

Comme indiqué plus haut, dans la partie supérieure de la lentille, la limite de la zone de vision de loin est sensiblement constituée par les lignes 17 et 17' d'isocylindre 0,50 dioptrie. La lentille de l'invention présente donc une large zone de vision de loin, s'étendant sur presque toute la moitié supérieure de la lentille.

Dans la partie inférieure de la lentille, la limite de la zone de vision de près est aussi sensiblement constituée par les lignes 17 et 17' d'isocylindre 0,50 dioptrie.

La valeur maximale du cylindre sur la surface de la lentille, dans la limite du cercle de rayon 20 mm, est de 0,88 dioptrie; elle est atteinte au point de coordonnées x=16, y=-8; cette valeur maximale est inférieure à l'addition.

Cette valeur maximale est atteinte du côté nasal; du côté temporal, la valeur maximale du cylindre de 0,83 dioptrie est atteinte pour un point x=-8, y=-6, à une distance de 10 mm du centre géométrique de la lentille. La différence entre les valeurs maximales du cylindre des côtés nasal et temporal de la lentille est inférieure à 0,05 dioptrie. L'invention propose que cette variation soit inférieure à 0,1 dioptrie, et de préférence inférieure à 0, 05 dioptrie.

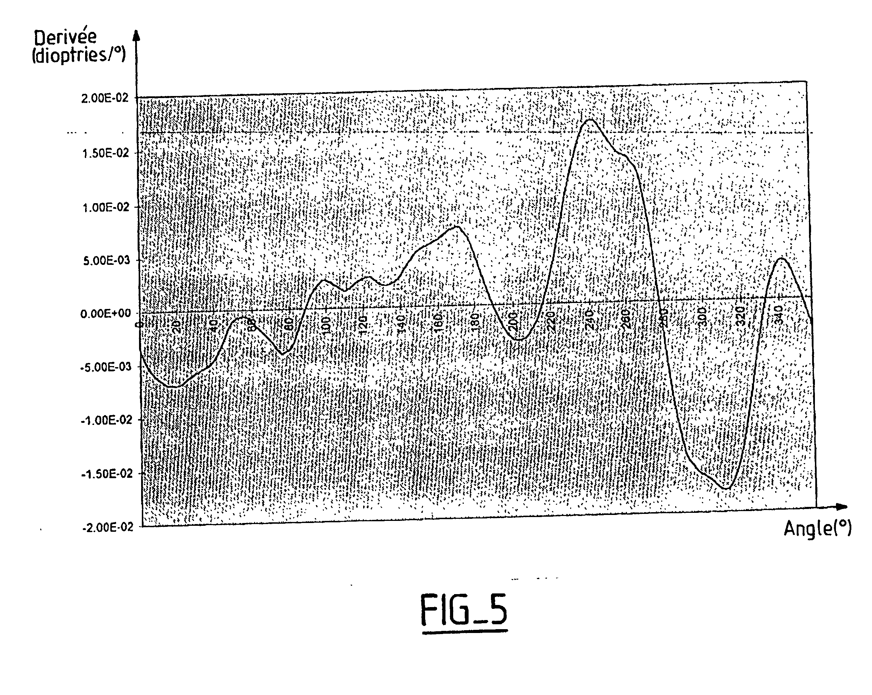

La figure 5 montre une représentation de la dérivée de la sphère en fonction de l'angle, sur le cercle de rayon 20 mm centré sur le centre géométrique de la lentille; l'axe des ordonnées est gradué en dioptrie/°; l'axe des abscisses est gradué en degrés et donne l'angle θ d'une demi-droite passant par le centre du cercle de rayon 20 mm avec l'horizontale; il apparaît de cette figure que le module maximal de la dérivée vaut 0,018 dioptrie/° et est atteint pour une valeur de θ voisine de 310°, i. e. dans la partie inférieure de la lentille.

La lentille des figures 2 à 5 assure ainsi une grande douceur, et une adaptation facilitée pour le porteur.

Quantitativement, ceci se traduit par les relations suivantes:

$$A/P_{mer} < 16 \text{ mm} \qquad (1)$$

$$|dS/d\theta|_{max}/P_{mer} < 0,25 \qquad (2)$$

et

$$C_{max} < A_{nom} \qquad (3)$$

Dans ces relations,

$|dS/d\theta|_{max}$ est la valeur maximale du module de la dérivée tangentielle de la sphère moyenne sur le cercle de rayon 20 mm centré au centre géométrique de la lentille;
$P_{mer}$ est la valeur maximale de la pente de sphère moyenne le long de la méridienne, en dioptrie par mm;

$C_{max}$ est la valeur maximale du cylindre à l'intérieur du cercle de rayon 20 mm mentionné plus haut.

$A_{nom}$ est la valeur nominale de l'addition de la lentille, en dioptrie.

La valeur de 0,25 est donc en mm/°.

La relation (1) comme expliqué plus haut, limite la longueur principale de progression de la lentille.

La relation (2) traduit le fait que les variations de sphère ne sont pas trop brutales le long du cercle de rayon 20 mm. Au lieu d'une dérivée par rapport à un angle, on aurait pu utiliser une dérivée par rapport à une abscisse curviligne sur le cercle. On appelle dérivée tangentielle de la sphère moyenne sur le cercle la dérivée de la sphère moyenne par rapport à l'angle θ d'une demi-droite passant par le centre du cercle de rayon 20 mm avec l'horizontale; le calcul de cette dérivée est une opération mathématique simple.

Dans cette relation, le facteur $1/P_{mer}$ est un facteur de normalisation, qui permet de comparer des lentilles d'addition différentes.

La troisième relation limite les variations du cylindre sur la surface de la lentille.

La combinaison de ces deux relations assure une bonne répartition des lignes d'isosphère et d'isocylindre sur la surface de la lentille, et assure ainsi une grande douceur de la lentille.

La combinaison des relations (1), (2) et (3) n'est satisfaite par aucune des lentilles ophtalmiques multifocales de l'art antérieur testées par la demanderesse. L'invention assure pour la première fois une telle répartition des lignes d'isocylindre et d'isosphère.

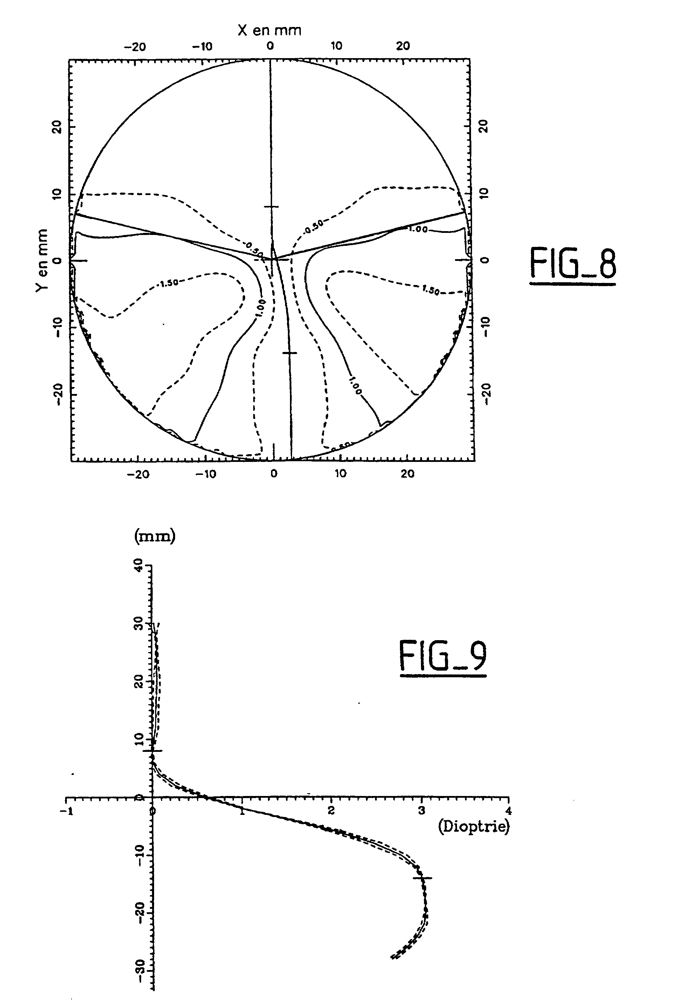

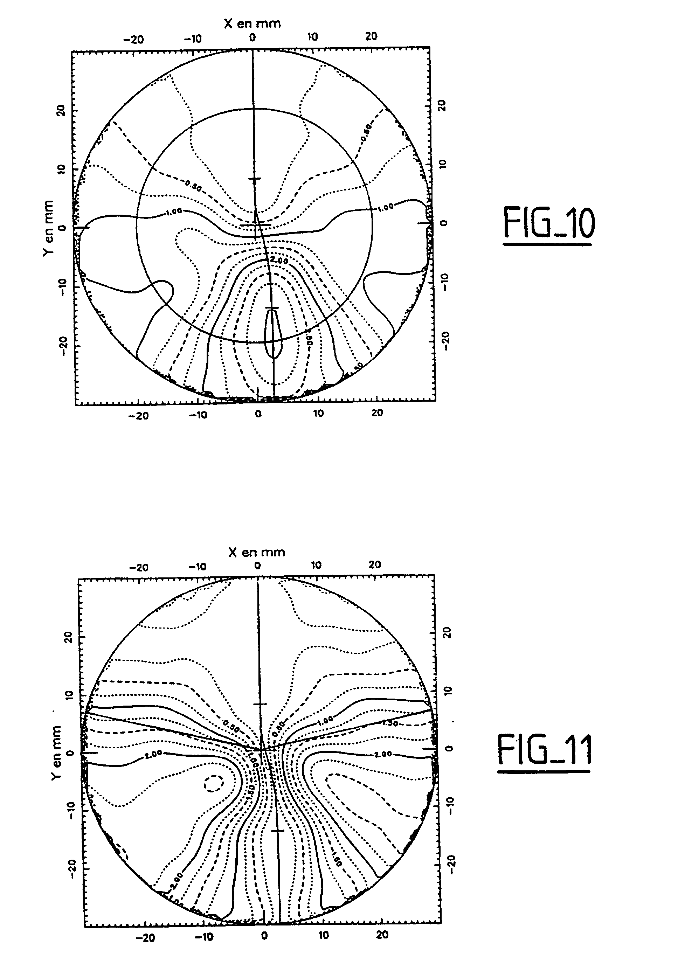

Les figures 6 à 8 montrent des vues analogues à celles des figures 2 à 4, mais pour une lentille d'addition deux dioptries; les figures 9 à 11 montrent des vues analogues à celles des figures 2 à 4, mais pour une lentille d'addition 3 dioptries. Sur les figures 7 et 8, on a respectivement représenté les lignes d'isosphère et d'isocylindre, avec un pas de 0,50 dioptrie; sur les figures 9 et 11, on a respectivement représenté les lignes d'isosphère et d'isocylindre, avec un pas de 0,25 dioptrie.

Pour chacune de ces lentilles, les relations (1) à (3) sont satisfaites. Dans le cas de la lentille des figures 2 à 5, on a

$$A/P_{mer} = 12,4 \text{ mm;}$$

$$|dS/d\theta|_{max}/P_{mer} = 0,22$$

et

$$C_{max} = 0,88 < A_{nom} = 1,00 \text{ dioptries.}$$

Pour les lentilles d'addition 2 et 3 dioptries, les rapports (relations 1 et 2) sont sensiblement identiques; les valeurs de cylindre maximal sont les suivantes:

$$C_{max} = 1,75 < A_{nom} = 2,00 \text{ dioptries,}$$

d'une part, et

$$C_{max} = 2,65 < A_{nom} = 3,00 \text{ dioptries,}$$

d'autre part.

L'invention propose d'autres caractéristiques avantageuses, qui, en combinaison avec les relations (1) (2) et (3), permettent d'améliorer les performances de la lentille de l'invention.

Comme mentionné plus haut en référence à la figure 2, la longueur principale de progression est avantageusement inférieure à 16 mm; elle est de 12,4 mm pour la lentille d'addition une dioptrie, et présente sensiblement la même valeur pour les lentilles d'addition 2 et 3 dioptries. Dans les lentilles de l'art antérieur, une longueur de progression aussi- faible induit généralement des distorsions en périphérie pour le porteur; selon l'invention, grâce aux conditions exprimées par les relations (1), (2) et (3), cette faible longueur de progression n'engendre aucune gêne pour le porteur.

L'invention propose aussi que la zone de vision de près présente à la hauteur du point de référence pour la vision de près une largeur d'au moins 14,5 mm; cette largeur est mesurée à l'ordonnée du point P, entre les lignes d'isocylindre A/2, A étant l'addition, définie comme plus haut. Comme on peut le voir sur la figure 3, dans le cas d'une addition d'une dioptrie, la largeur de la zone de vision de près est de 17 mm. Pour les lentilles d'addition deux et trois dioptries, la largeur de la zone de vision de près est sensiblement égale à cette valeur.

Dans un mode de réalisation de l'invention, la zone de vision de loin comprend au moins un secteur formé par deux demi-droites ayant pour origine le centre géométrique de la lentille, l'angle entre ces deux demi-droites vers la partie supérieure de la lentille étant d'environ 150°. Comme on peut le voir sur la figure 4, dans le cas d'une addition d'une dioptrie, l'angle β entre les demi-droites 19 et 19' correspondantes est de 153°. Pour une addition de deux dioptries, comme pour une addition de trois dioptrie, la valeur est sensiblement identique. On rappelle aussi que la zone de vision de loin est limitée dans la partie supérieure de la lentille par les lignes d'isocylindre A/2, A étant l'addition, telle que définie plus haut. Les demi-droites en cause sont tracées sur les figures 8 et 11.

Afin d'améliorer la vision binoculaire, l'invention propose encore que la différence de cylindre maximal, entre les deux parties de la lentille délimitées par la méridienne principale de progression soit inférieure à 0,10 dioptrie. Dans le cas de la figure 4, pour une addition d'une dioptrie, le cylindre maximal côté nasal (à droite sur la figure 4) est de 0,88 dioptries; côté temporal, il est de 0,83 dioptries. Pour la lentille de la figure 8 (addition deux dioptries), les valeurs correspondantes sont de 1,74 et 1,69 dioptries; pour la lentille de la figure 11 (addition de trois dioptries), les valeurs correspondantes sont de 2,65 et 2,60 dioptries.

Avantageusement, le cylindre sur la lentille est inférieur à l'addition, et de préférence inférieur à 90% de l'addition. A titre d'exemple, dans le cas d'une addition d'une dioptrie, le cylindre maximal vaut 0,88 dioptries; il vaut 1,74 dioptries pour une addition de deux dioptries et 2,65 dioptries pour une addition de trois dioptries.

On détaille maintenant les différentes caractéristiques qui permettent de réaliser les différentes lentilles selon l'invention. La surface des lentilles est de façon connue en soi, continue et trois fois continûment dérivable. Comme cela est connu de l'homme du métier, la surface de lentilles progressives s'obtient par optimisation numérique à l'aide d'un calculateur, en fixant des conditions aux limites pour un certain nombre de paramètres de la lentilles.

On peut utiliser comme conditions aux limites la combinaison des deux relations définies plus haut, avec le cas échéant un ou plusieurs des autres critères définis plus haut.

Ces critères s'appliquent tant pour une lentille multifocale progressive classique, avec un point de référence dans la zone de vision de près et un point de référence dans la zone de vision de loin, que pour une lentille multifocale dédiée à la vision de près et à la vision intermédiaire.

On peut aussi avantageusement commencer par définir, pour chacune des lentilles de la famille, une méridienne principale de progression. On peut utiliser à cet effet l'enseignement du brevet FR-A-2 683 642 susmentionné. On peut aussi utiliser toute autre définition de la méridienne principale de progression pour appliquer l'enseignement de l'invention.

Bien entendu, la présente invention n'est pas limitée à la présente description: entre autres, la surface asphérique pourrait être la surface dirigée vers le porteur des lentilles. Par ailleurs, on n'a pas insisté dans la description sur l'existence de lentilles qui peuvent être différentes pour les deux yeux.

## Revendications

1.    Lentille ophtalmique multifocale, comportant une surface asphérique (S) présentant en tout point une sphère moyenne et un cylindre, et comprenant une zone de vision de loin (VL) avec un point de référence pour la vision de loin, une zone de vision de près (VP) avec un point de référence pour la vision de près, une zone de vision intermédiaire (VI), une méridienne principale de progression (MM') traversant ces trois zones, une addition définie comme la différence entre les valeurs de sphère moyenne au point de référence pour la zone de vision de près et au point de référence pour la zone de vision de loin, et une longueur principale de progression inférieure à 16 mm, la longueur principale de progression étant définie comme la distance verticale entre une croix de montage et un point de la méridienne où la sphère moyenne est supérieure de 85% de l'addition à la sphère moyenne au point de référence de la zone de vision de loin,

    **caractérisée en ce que** la valeur maximale $|dS/d\theta|_{max}$ du module de la dérivée tangentielle de la sphère moyenne sur un cercle d'un diamètre de 40 mm, centré sur le centre géométrique de la lentille est inférieur au quart de la valeur maximale $P_{mer}$ de la pente de sphère moyenne le long de la méridienne:

$$|dS/d\theta|_{max}/P_{mer} < 0{,}25$$

    et en ce que la valeur maximale $C_{max}$ du cylindre à l'intérieur dudit cercle est inférieure à l'addition nominale de la lentille:

$$C_{max} < A_{nom}.$$

2.    Lentille ophtalmique multifocale dédiée à la vision de près et à la vision intermédiaire, comportant une surface asphérique (S) présentant en tout point une sphère moyenne et un cylindre, et comprenant une zone de vision de loin (VL), une zone de vision de près (VP), avec un point de référence pour la vision de près, une zone de vision intermédiaire (VI), une méridienne principale de progression (MM') traversant ces trois zones,

    **caractérisée en ce qu'**elle présente une addition A définie comme la différence entre les valeurs maximale et minimale de la sphère moyenne sur la méridienne principale de progression, dans un cercle d'un diamètre de 40 mm, centré sur le centre géométrique de la lentille,

        en ce que la longueur principale de progression est inférieure à 16 mm, la longueur principale de progression étant définie comme le rapport entre l'addition et la valeur maximale de la pente de sphère moyenne $P_{mer}$ le long de la méridienne,
        en ce que la valeur maximale $|dS/d\theta|_{max}$ du module de la dérivée tangentielle de la sphère moyenne sur un cercle d'un diamètre de 40 mm, centré sur le centre géométrique de la lentille est inférieur au quart de la valeur maximale $P_{mer}$ de la pente de sphère moyenne le long

de la méridienne:

$$|dS/d\theta|_{max}/P_{mer} < 0{,}25$$

et en ce que la valeur maximale $C_{max}$ du cylindre à l'intérieur dudit cercle est inférieure à l'addition nominale de la lentille:

$$C_{max} < A_{nom}.$$

3. Lentille selon la revendication 1 ou 2, **caractérisée en ce que** la méridienne principale de progression est constituée des milieux des segments horizontaux reliant les lignes respectives formées des points de cylindre 0,50 dioptrie.

4. Lentille selon la revendication 1, 2 ou 3, **caractérisée en ce que** la zone de vision de près, délimitée dans la partie inférieure de la lentille par des lignes formées des points dont le cylindre est égal à la moitié de l'addition présente une largeur supérieure à 14,5 mm à la hauteur d'un point de référence pour la vision de près.

5. Lentille selon la revendication 1, 3 ou 4, **caractérisée en ce que** la zone de vision de loin, délimitée dans la partie supérieure de la lentille par des lignes formées des points dont le cylindre est égal à la moitié de l'addition comprend au moins un secteur formé par deux demi-droites ayant pour origine le centré géométrique de la lentille , l'angle entre ces deux demi-droites vers la partie supérieure de la lentille étant d'au moins 150°.

6. Lentille selon l'une des revendications 1 à 5, **caractérisée en ce que** le cylindre sur la surface de la lentille est inférieur à l'addition, de préférence inférieur à 90% de l'addition.

7. Lentille selon l'une des revendications 1 à 6, **caractérisée en ce que** la différence des valeurs maximales du cylindre sur les deux parties de la lentille délimitées par la méridienne principale de progression est inférieure à 0,1 dioptrie, de préférence inférieure à 0,05 dioptrie.

**Patentansprüche**

1. Multifokale ophthalmische Linse, umfassend eine asphärische Fläche (S), die an jedem Punkt eine mittlere Flächenbrechkraft und einen Flächenastigmatismus aufweist, und umfassend eine Fernsichtzone (VL) mit einem Referenzpunkt für die Fernsicht, eine Nahsichtzone (VP) mit einem Referenzpunkt für die Nahsicht, eine Mittelsichtzone (VI), einen Hauptprogressionsmeridian (MM'), der die drei Zonen durchquert, eine Addition, definiert als die Differenz zwischen den Werten der mittleren Flächenbrechkraft am Referenzpunkt für die Nahsicht und am Referenzpunkt für die Fernsicht, sowie eine Hauptprogressionslänge von weniger als 16 mm, wobei die Hauptprogressionslänge definiert ist als der vertikale Abstand zwischen einem Montagekreuz und einem Punkt des Meridians, an dem die mittlere Flächenbrechkraft größer ist als 85% der Addition mit Bezug auf die mittlere Flächenbrechkraft am Referenzpunkt der Fernsichtzone, **dadurch gekennzeichnet, daß** der maximale Wert $|dS/d\theta|_{max}$ des Tangential-Ableitungsmodules der mittleren Flächenbrechkraft an einem Kreis mit einem Durchmesser von 40 mm, zentriert bezüglich der geometrischen Mitte der Linse kleiner ist als ein Viertel des Maximalwertes $P_{mer}$ des Gradienten der mittleren Flächenbrechkraft entlang dem Meridian:

$$|dS/d\theta\,|_{max}/P_{mer} < 0{,}25$$

und daß der Maximalwert $C_{max}$ des Flächenastigmatismus im Inneren des Kreises kleiner ist als die Nennaddition der Linse:

$$C_{max} < A_{nom}.$$

2. Zur Nahsicht und zur Mittelsicht bestimmte multifokale ophthalmische Linse, umfassend eine asphärische Fläche (S), die an jedem Punkt eine mittlere Flächenbrechkraft und einen Flächenastigmatismus aufweist, und umfassend eine Fernsichtzone (VL), eine Nahsichtzone (VP) mit einem Referenzpunkt für die Nahsicht, eine Mittelsichtzone (VI), einen Hauptprogressionsmeridian (MM'), der die drei Zonen durchquert, **dadurch gekennzeichnet, daß** sie eine Addition A aufweist, definiert als die Differenz zwischen den Maximal- und Minimalwerten der mittleren Flächenbrechkraft an dem Hauptprogressionsmeridian, vorliegend in einem Kreis mit einem Durchmesser von 40 mm, zentriert mit Bezug auf die geometrische Mitte der Linse,

daß die Hauptprogressionslänge geringer ist als 16 mm, wobei die Hauptprogressionslänge definiert ist als die Beziehung zwischen der Addition und dem Maximalwert des Gradienten der mittleren Flächenbrechkraft $P_{mer}$ entlang dem Meridian,
daß der maximale Wert $|dS/d\theta\,|_{max}$ des Tangential-Ableitungsmodules der mittleren Flächenbrechkraft an einem Kreis mit einem Durchmesser von 40 mm, zentriert mit Bezug auf die geometrische Mitte der Linse, geringer ist als ein Viertel des Maximalwertes $P_{mer}$ des

Gradienten der mittleren Flächenbrechkraft entlang dem Meridian:

$$|dS/d\theta\ |_{max}/P_{mer} < 0{,}25$$

und daß der Maximalwert $C_{max}$ des Flächenastigmatismus im Inneren des Kreises geringer ist als die Nennaddition bzw. nominale Addition der Linse:

$$C_{max} < A_{nom}.$$

3. Linse nach Anspruch 1 oder 2, **dadurch gekennzeichnet, daß** der Hauptprogressionsmeridian gebildet ist aus Mitten von horizontalen Segmenten, die Linien verbinden, welche jeweils gebildet sind aus Punkten mit einem Flächenastigmatismus bzw. Zylinder von 0,50 Dioptrie.

4. Linse nach Anspruch 1, 2 oder 3, **dadurch gekennzeichnet, daß** die Nahsichtzone, begrenzt in dem unteren Abschnitt der Linse durch Linien, die gebildet sind aus Punkten deren Flächenastigmatismus bzw. Zylinder gleich ist zu der Hälfte der Addition, eine Breite aufweist, die größer ist als 14,5 mm, auf der Höhe eines Referenzpunktes für die Nahsicht.

5. Linse nach Anspruch 1, 3 oder 4, **dadurch gekennzeichnet, daß** die Femsichtzone, begrenzt in dem oberen Abschnitt der Linse durch Linien, die gebildet sind aus Punkten, deren Zylinder bzw. Flächenastigmatismus gleich ist zu der Hälfte der Addition, zumindest einen Sektor umfaßt, gebildet aus zwei Halbgeraden, die als Ursprung die geometrische Mitte der Linse aufweisen, wobei der Winkel zwischen den zwei Halbgeraden hin zu dem oberen Abschnitt der Linse zumindest 150° ausmacht.

6. Linse nach einem der Ansprüche 1 bis 5, **dadurch gekennzeichnet, daß** der Zylinder bzw. Flächenastigmatismus an der Fläche bzw. Oberfläche der Linse kleiner als die Addition ist, insbesondere kleiner als 90% der Addition.

7. Linse nach einem der Ansprüche 1 bis 6, **dadurch gekennzeichnet, daß** die Differenz der Maximalwerte des Flächenastigmatismus an den zwei Abschnitten der Linse, begrenzt durch den Hauptprogressionsmeridian, geringer ist als 0,1 Dioptrie, insbesondere kleiner als 0,05 Dioptrie.

**Claims**

1. A multifocal ophthalmic lens comprising an aspherical surface having at every point thereon a mean sphere and a cylinder, said lens having a power addition and comprising a far vision region (VL), a near vision region (VP) with a reference point for near vision, an intermediate vision region (VI), a main meridian of progression (MM') passing through said three regions, a power addition defined as a difference between the values of mean sphere at the near and far vision reference points, a principal length of progression shorter than 16 mm, the principal length of progression being defined as a difference in height between the y-axis value of a mounting center and the y-axis value of a point on said meridian at which mean sphere is equal to the sum of mean sphere at said reference point for far vision, plus 85% of said power addition,
   **characterized in that** a maximum value $|dS/d\theta|_{max}$ of a modulus of the tangential derivative of mean sphere on a 40 mm diameter circle centered on a geometric center of said lens is less than one quarter of the maximum value $P_{mer}$ of a slope of mean sphere along said meridian :

$$|dS/d\theta|_{max}/P_{mer} < 0.25$$

and in that a maximum value $C_{max}$ of cylinder inside said circle is less than a nominal power addition of said lens :

$$C_{max} < A_{nom}.$$

2. A multifocal ophthalmic lens comprising an aspherical surface having at every point thereon a mean sphere and a cylinder, said lens having a power addition and comprising a far vision region (VL), a near vision region (VP) with a reference point for near vision, an intermediate vision region (VI), a main meridian of progression (MM') passing through said three regions,
   **characterized in that** it has a power addition A defined as a difference between the values of mean sphere on the main meridian of progression within a 40 mm diameter circle centered on a geometric center of said lens,

   in that it has a principal length of progression shorter than 16 mm, the principal length of progression being defined as the ratio between power addition and a maximum value of mean sphere slope $P_{mer}$ along the meridian,
   in that a maximum value $|dS/d\theta|_{max}$ of a modulus of the tangential derivative of mean sphere on a 40 mm diameter circle centered on a geometric center of said lens is less than one quarter of the maximum value $P_{mer}$ of a slope of mean sphere along said meridian :

$$|dS/d\theta|_{max}/P_{mer} < 0.25$$

and in that a maximum value $C_{max}$ of cylinder inside said circle is less than a nominal power addition of said lens :

$$C_{max} < A_{nom}.$$

3. The lens according to claim 1 or 2, **characterized in that** said main meridian of progression is made up by mid-points of horizontal segments joining respective lines formed by points where cylinder is 0.50 diopter.

4. The lens according to claim 1, 2 or 3, **characterized in that** said near vision region, delimited in an upper portion of said lens by lines formed by points where cylinder is equal to half power addition has a width that is greater than 14.5 mm at a point of reference for near vision.

5. The lens according to claim 1, 2, 3 or 4, **characterized in that** said far vision region defined in an upper portion of said lens by lines formed by points where cylinder is equal to half power addition, contains at least one angular sector formed by two upwardly-directed half-lines originating at a geometric center of said lens and having an included angle of at least 150°.

6. The lens according to one of claims 1 to 5, **characterized in that** cylinder at the surface of said lens is less than power addition, preferably less than 90% of power addition.

7. The lens according to one of claims 1 to 6, **characterized in that** a difference in maximum cylinder values at the two portions of said lens delimited by the main meridian of progression is less than 0.1 diopters, preferably less than 0.05 diopters.

FIG_1

Hauteur (mm)

FIG_2

C1, C2, Sphere (Dioptrie)

FIG_3

FIG_4

FIG_5

EP 0 911 670 B1

FIG_6

(mm)

(Dioptrie)

FIG_7

X en mm

Y en mm

FIG_8

FIG_9

FIG_10

FIG_11